# EUROPEAN PATENT APPLICATION

(11) **EP 2 424 260 A2**
(43) Date of publication of application: **29.02.2012**
(21) Application number: 11177686.0
(22) Date of filing: 16.08.2011
(51) Int. Cl.: H04N 13/04

(54) **Image processing apparatus and image processing method**

(30) Priority: 30.08.2010 JP 2010192711
(71) Applicant: CANON KABUSHIKI KAISHA, Ohta-ku Tokyo 146-8501 (JP)
(72) Inventor: Matsui, Taichi, Ohta-ku, Tokyo (JP); Aso, Takashi, Ohta-ku, Tokyo (JP)
(74) Representative: Garner, Jonathan Charles Stapleton

(57) **Abstract**

Three-dimensional CG software (101) generates an image of a virtual space, and an image output unit (102) outputs this image to an HMD (107). An automatic mode switching unit (200) determines whether the HMD (107) is in use, and operates the three-dimensional CG software (101) if the HMD (107) is in use.

## Description

### BACKGROUND OF THE INVENTION

### Field of the Invention

The present invention relates to a mixed reality presentation technique.

### Description of the Related Art

In the field of mechanical design, conventionally a three-dimensional CAD system has been used, so a mechanism and its constituent components can be designed and be displayed stereoscopically. The three-dimensional CAD system generally uses a two-dimensional display as a display device, and a mouse and a keyboard as an input device.

On the other hand, in recent years, a display device that stereoscopically displays three-dimensional data has come into practical use. Such a display device displays with polarization a video image having a given parallax so that the viewer can perceive a stereoscopic effect using polarized glasses.

A display device which uses a mixed reality technique of superimposing virtual information such as three-dimensional data on a physical space, and presenting a mixed reality, for example, has also come into practical use. A display device which presents a mixed reality has, for example, the following configuration. That is, this device displays an image in which a virtual space image (for example, a virtual object or text information rendered by computer graphics) generated in accordance with the position and orientation of an image sensing device such as a video camera is superimposed and rendered on a physical space image sensed by the image sensing device. An HMD (Head-Mounted Display), for example, can be used as this display device. This display device can also be implemented by an optical see-through scheme in which a virtual space image generated in accordance with the position and orientation of the viewpoint of the observer is displayed on an optical see-through display mounted on the observer's head.

In this manner, several systems which use a display device capable of stereoscopic display to observe three-dimensional data designed by a three-dimensional CAD system are available. Japanese Patent Laid-Open No. 2007-299062 gives a detailed example of such a system. Using a method described in this patent literature, a three-dimensional CAD system can also be utilized as a mixed reality system.

In a system which uses a mixed reality system to observe three-dimensional data generated by a three-dimensional CAD system, it is a common practice to switch between display units based on an arbitrary operation by the observer. A method of switching from a display which uses a two-dimensional display to that which uses a mixed reality system by clicking a button on a screen with a mouse, for example, is commonly used. However, an operation unit (which uses a two-dimensional display, a mouse, and a keyboard) of a normal three-dimensional CAD system, and a mixed reality system allow the operator to execute operations using different operation units and operation methods. Hence, to switch between two modes that define these operations, the operator must learn different operation methods in the respective systems. It is desirable if the observer can execute a system operation as simply as possible so that these two modes are automatically switched.

### SUMMARY OF THE INVENTION

The present invention has been made in consideration of the above-mentioned problem, and provides a technique for switching between images, which are to be provided to a display device which the observer who observes a mixed reality space wears or a display device provided separately from the display device which the observer wears, as needed, without requiring the operation of the observer.

The present invention in its first aspect provides an image processing apparatus as specified in claims 1 to 9.

The present invention in its second aspect provides an image processing method as specified in claim 10.

Further features of the present invention will become apparent from the following description of exemplary embodiments with reference to the attached drawings.

### BRIEF DESCRIPTION OF THE DRAWINGS

Fig. 1 is a block diagram showing the configuration of a conventional system;

Fig. 2 is a flowchart showing processing executed by three-dimensional CG software 101 when an HMD 107 is not in use;

Fig. 3 is a flowchart showing the operation of the system;

Fig. 4 is a block diagram illustrating an example of the functional configuration of a system;

Fig. 5 is a block diagram illustrating another example of the functional configuration of a system; and

Fig. 6 is a block diagram illustrating an example of the configuration of an apparatus applicable to a computer 400.

### DESCRIPTION OF THE EMBODIMENTS

Embodiments of the present invention will be described below with reference to the accompanying drawings. Note that the embodiments to be described hereinafter exemplify a case in which the present invention is actually practiced, and are practical embodiments of the arrangement defined in claims.

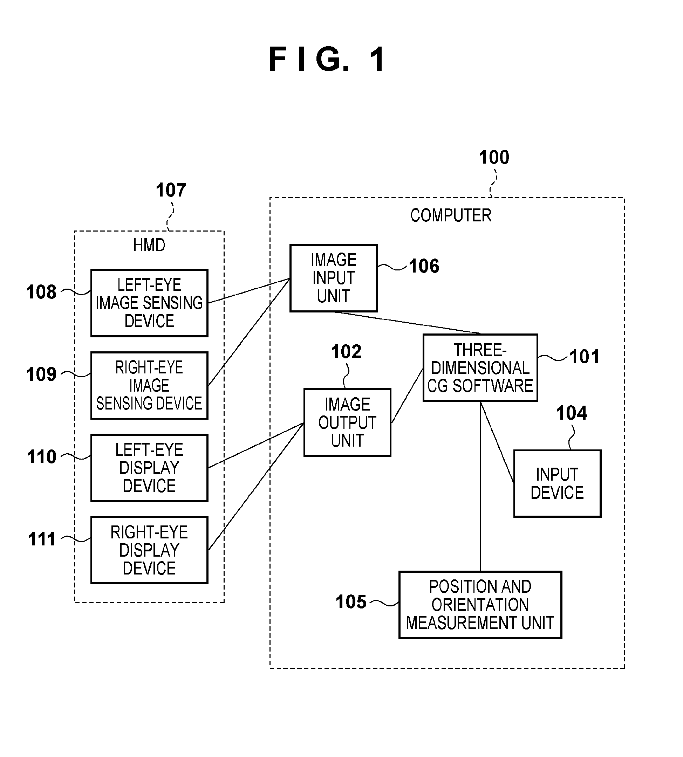

[First Embodiment]
The configuration of a conventional system for generating a mixed reality space image, that is a composite image formed from a virtual space image and a physical space image, and presenting the generated image to the observer will be described with reference to a block diagram shown in Fig. 1. As a matter of course, various configurations for generating a mixed reality space image and presenting the generated image to the observer have conventionally been proposed, but only a specific example thereof will be given herein.

This system includes an HMD 107 and computer 100, as shown in Fig. 1. The HMD 107 includes a left-eye camera (image-sensing device) 108 and right-eye camera (image-sensing device) 109. The left-eye camera 108 captures an image corresponding to the left eye of the observer who wears the HMD 107 on his or her head. The right-eye camera 109 captures an image corresponding to the right eye of the observer who wears the HMD 107 on his or her head. Each of the left-eye camera 108 and right-eye camera 109 capture a moving image, and sends the sensed image (the physical space image) of each frame to the computer 100.

The HMD 107 also includes a left-eye display device 110 and right-eye display device 111. The left-eye display device 110 provides an image to the left eye of the observer who wears the HMD 107 on his or her head. The right-eye display device 111 provides an image to the right eye of the observer who wears the HMD 107 on his or her head. The left-eye display device 110 and right-eye display device 111 are attached to the HMD 107 so as to be positioned in front of the left and right eyes, respectively, of the observer when he or she wears the HMD 107 on his or her head. The left-eye display device 110 displays a left-eye image sent from the computer 100, and the right-eye display device 111 displays a right-eye image sent from the computer 100. Thus, the left-eye image is displayed in front of the left eye of the observer, and the right-eye image is displayed in front of his or her right eye, so the observer can experience stereoscopic vision by observing the individual images with his or her corresponding eyes.

The computer 100 which functions as an image processing apparatus will be described next. An image input unit 106 acquires physical space images which are sent from the left-eye camera 108 and right-eye image camera 109, respectively, and supplies the respective acquired physical space images to three-dimensional CG software 101.

A position and orientation measurement unit 105 collects information required to obtain the positions and orientations of the left-eye camera 108 and right-eye camera 109. Various types of information are available as this collected information.

For example, the left-eye camera 108 and right-eye camera 109 are attached to the HMD 107 while their positional relationship is fixed, so as long as the position and orientation of one camera is measured, those of the other cameras can be calculated. Hence, in this case, the position and orientation measurement unit 105 need only measure the position and orientation of one of the left-eye camera 108 and right-eye camera 109.

Also, as long as the position and orientation of one point on the HMD 107 that has a known positional relationship with the left-eye camera 108 are measured, the position and orientation of the left-eye camera 108 can be calculated. The same holds true for the right-eye camera 109.

In this manner, as long as the position and orientation of a measurement target can be obtained, the portion which undergoes position and orientation measurement, and the way in which the measured position and orientation are used to obtain the positions and orientations of the left-eye camera 108 and right-eye camera 109, are not particularly limited.

Also, various methods of measuring the position and orientation of a measurement target have conventionally been proposed, and any method may be employed. For example, when a magnetic sensor is used, a magnetic receiver is attached at the position of a measurement target, and used to measure a magnetic change from a magnetic source disposed in a physical space, thereby obtaining the position and orientation of the receiver from the measured magnetic change. Alternatively, a method of providing a physical space with a camera which senses a moving image of the HMD 107, and estimating the position and orientation of the HMD 107 from the sensed image of each frame sensed by the camera may be employed.

Thus, in this embodiment, any technique can be adopted as long as the positions and orientations of the left-eye camera 108 and right-eye camera 109 can be acquired. A configuration for implementing the adopted technique serves as the position and orientation measurement unit 105. As a matter of course, depending on the configuration, the position and orientation measurement unit 105 may be provided outside the computer 100 or built into a device of some kind.

The position and orientation acquired by the position and orientation measurement unit 105 are supplied to the three-dimensional CG software 101. Based on the supplied position and orientation, the three-dimensional CG software 101 confirms the positions and orientations of the left-eye camera 108 and right-eye camera 109. Different confirmation methods are used depending on which portion has undergone position and orientation measurement, as described above.

The three-dimensional CG software 101 generates a virtual space image, which is seen from a viewpoint having the confirmed position and orientation of the left-eye camera 108, using virtual space data which is held in the computer 100 or acquired from an external device. The three-dimensional CG software 101 composites the generated virtual space image on the physical space image which is sensed by the left-eye camera 108 and acquired from the image input unit 106, thereby generating a left-eye mixed reality space image. Similarly, the three-dimensional CG software 101 generates a virtual space image, which is seen from a viewpoint having the confirmed position and orientation of the right-eye camera 109, using the above-mentioned virtual space data. The three-dimensional CG software 101 composites the generated virtual space image on the physical space image which is sensed by the right-eye camera 109 and acquired from the image input unit 106, thereby generating a right-eye mixed reality space image.

An image output unit 102 sends the left-eye mixed reality space image generated by the three-dimensional CG software 101 to the left-eye display device 110, and sends the right-eye mixed reality space image generated by the three-dimensional CG software 101 to the right-eye display device 111.

An input device 104 uses, for example, a mouse and keyboard and is operated by the operator of the computer 100 to input an instruction to the computer 100. The input device 104 is used to input, for example, an instruction for switching the details to be displayed on the left-eye display device 110 and right-eye display device 111.

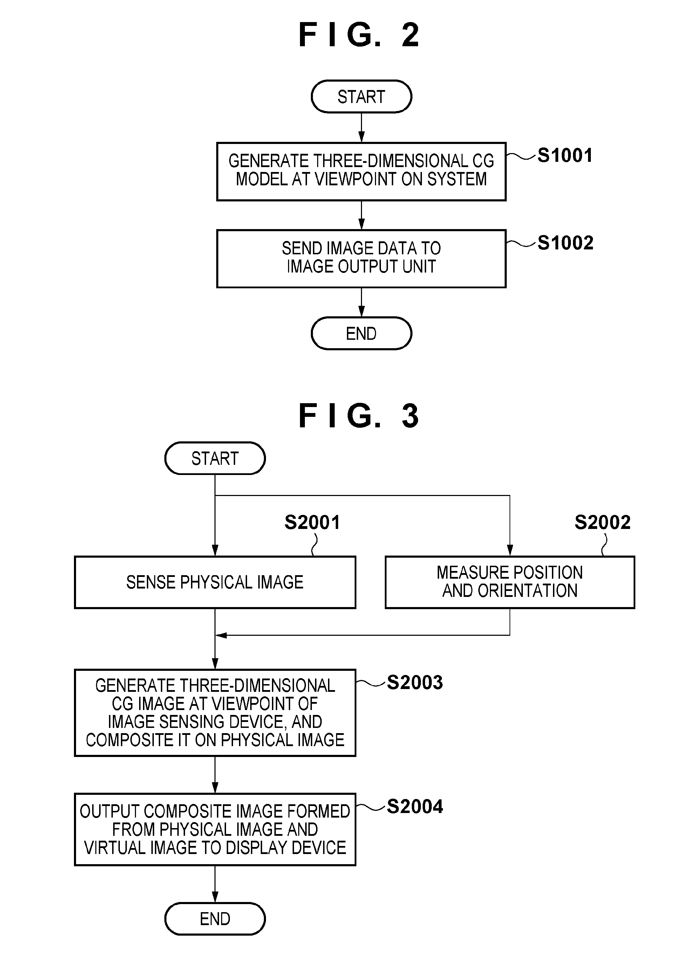

The operation of the above-mentioned system will be described with reference to a flowchart shown in Fig. 3. In step S2001, the left-eye camera 108 and right-eye camera 109 sense a left-eye physical space image and a right-eye physical space image, respectively, and send the sensed images to the computer 100. The image input unit 106 supplies these respective images to the three-dimensional CG software 101.

Parallel to step S2001, in step S2002, the position and orientation measurement unit 105 measures the position and orientation of a measurement target, and supplies the measured position and orientation to the three-dimensional CG software 101.

In step S2003, the three-dimensional CG software 101 confirms the positions and orientations of the left-eye camera 108 and right-eye camera 109 based on the position and orientation supplied from the position and orientation measurement unit 105. The three-dimensional CG software 101 generates a virtual space image, which is seen from a viewpoint having the confirmed position and orientation of the left-eye camera 108, using the above-mentioned virtual space data. The three-dimensional CG software 101 composites the generated virtual space image on the physical space image which is sensed by the left-eye image sensing device 108 and acquired from the image input unit 106, thereby generating a left-eye mixed reality space image. Similarly, the three-dimensional CG software 101 generates a virtual space image, which is seen from a viewpoint having the confirmed position and orientation of the right-eye camera 109, using the above-mentioned virtual space data. The three-dimensional CG software 101 composites the generated virtual space image on the physical space image which is sensed by the right-eye image sensing device 109 and acquired from the image input unit 106, thereby generating a right-eye mixed reality space image.

In step S2004, the image output unit 102 sends the left-eye mixed reality space image generated by the three-dimensional CG software 101 to the left-eye display device 110, and sends the right-eye mixed reality space image generated by the three-dimensional CG software 101 to the right-eye display device 111.

The above-mentioned configuration is used in a conventional system for presenting a mixed reality space to the observer. A system in which a configuration for switching the details to be displayed on the left-eye display device 110 and right-eye display device 111 in accordance with the state of use of the HMD 107 is added to the computer 100 will be described in this embodiment.

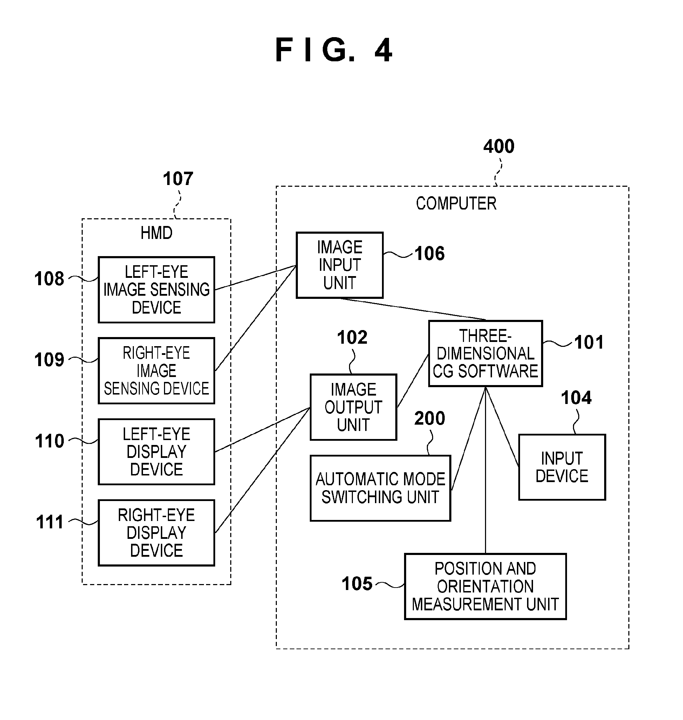

An example of the functional configuration of a system according to this embodiment will be explained first with reference to a block diagram shown in Fig. 4. The same reference numerals as in Fig. 1 denote the same constituent elements in Fig. 4, and a description thereof will not be given.

A computer 400 is equipped with an automatic mode switching unit 200, in addition to the configuration of the computer 100. The automatic mode switching unit 200 monitors the state of the HMD 107 to determine whether the HMD 107 is in use. In accordance with the determination result, the automatic mode switching unit 200 performs operation control to permit or stop the operation of the three-dimensional CG software 101.

Note that various approaches are available to monitor the state of the HMD 107. In one example, the automatic mode switching unit 200 monitors whether the power source of the HMD 107 is ON or OFF. This monitoring is desirably periodically performed. If the power source of the HMD 107 is ON, the automatic mode switching unit 200 determines that the HMD 107 is in use; or if the power source of the HMD 107 is OFF, the automatic mode switching unit 200 determines that the HMD 107 is not in use.

In another example, a contact sensor is provided at a position on the HMD 107, where it comes into contact with the observer's head, so that the automatic mode switching unit 200 receives a signal from the contact sensor (a signal indicating whether it has come into contact with the observer's head) when the observer wears the HMD 107 on his or her head. The automatic mode switching unit 200 monitors this signal (monitors whether the HMD 107 is mounted on the observer's head). If this signal indicates that "the HMD 107 is mounted on the observer's head", the automatic mode switching unit 200 determines that the HMD 107 is in use. On the other hand, if this signal indicates that "the HMD 107 is not mounted on the observer's head", the automatic mode switching unit 200 determines that the HMD 107 is not in use.

In this manner, the automatic mode switching unit 200 determines using various methods whether the HMD 107 is currently in use. As a matter of course, the determination method is not limited to the above-mentioned one, and various methods are available. While the automatic mode switching unit 200 determines that the HMD 107 is currently in use, it permits execution of the three-dimensional CG software 101; and when the automatic mode switching unit 200 determines that the HMD 107 is not in use, it inhibits execution of the three-dimensional CG software 101.

Thus, when the HMD 107 is not currently in use, a mixed reality space image is neither generated nor output to the HMD 107, so wasteful image generation processing and image output processing can be omitted.

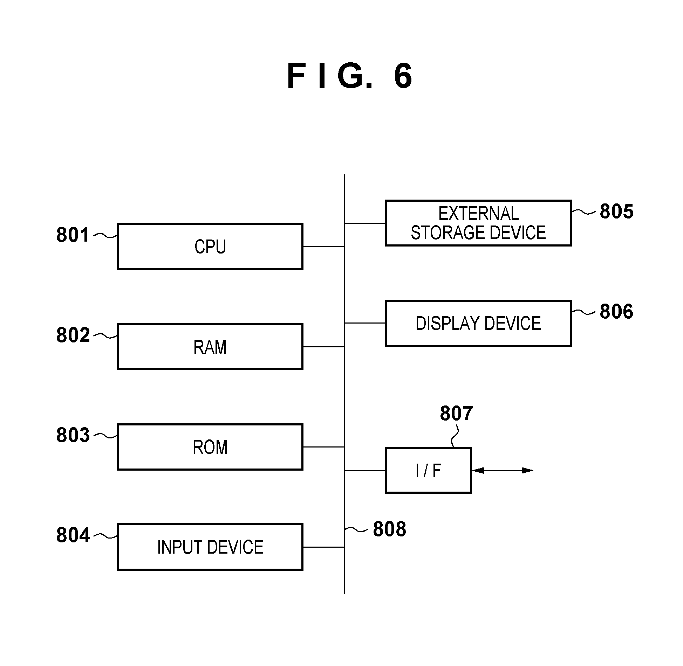

An example of the configuration of an apparatus applicable to the computer 400 will be explained with reference to a block diagram shown in Fig. 6. As a matter of course, a configuration other than that of an apparatus applicable to the computer 400 is available, and the present invention is not limited to the configuration shown in Fig. 6.

A CPU 801 executes processing using computer programs and data stored in a RAM 802 and ROM 803 to control the overall operation of the computer 400, and executes the above-mentioned respective types of processing assumed to be executed by the computer 400.

The RAM 802 has an area used to temporarily store computer programs and data read out from an external storage device 805, and that used to temporarily store various types of data received from the outside via an I/F 807. The RAM 802 also has a work area used to execute various types of processing by the CPU 801. That is, the RAM 802 can provide various areas as needed. The ROM 803 stores, for example, setting data and a boot program of the computer 400.

An input device 804 corresponds to the input device 104, and uses, for example, a mouse and a keyboard. The operator of the computer 400 can input various instructions to the CPU 801 by operating the input device 804.

The external storage device 805 is a mass information storage device such as a hard disk drive device. The external storage device 805 stores an OS (Operating System), and pieces of information required to execute the above-mentioned respective types of processing by the CPU 801, such as various types of computer programs including the three-dimensional CG software 101 and various types of data including virtual space data. The computer programs and data stored in the external storage device 805 are loaded into the RAM 802 as needed in accordance with the control of the CPU 801, and are processed by the CPU 801. Although the three-dimensional CG software 101 plays a main role in processing in the above description, in practice the CPU 801 executes the three-dimensional CG software 101 to execute the above-mentioned processing assumed to be executed by the three-dimensional CG software 101.

A display device 806 uses, for example, a CRT or a liquid crystal screen, and can display the processing result obtained by the CPU 801 using, for example, an image or a text. An I/F 807 is used to connect the HMD 107, and corresponds to the image input unit 106 and image output unit 102. Also, the I/F 807 may be connected to the position and orientation measurement unit 105. The above-mentioned respective units are connected to a bus 808.

Although the automatic mode switching unit 200 may be implemented by hardware in Fig. 4, it may be stored in the external storage device 805 as a computer program. In the latter case, the CPU 801 executes this computer program to execute the above-mentioned respective types of processing assumed to be executed by the automatic mode switching unit 200.

Also, although a head-mounted display such as the HMD 107 is used as a display device which the observer wears in this embodiment, other types of display devices may be used. For example, a handheld display device may be used in place of the HMD 107. Alternatively, a three-dimensional display or a mobile terminal which integrates a display and a camera may be used.

Moreover, although two, left- and right-eye cameras are provided as devices which sense physical space images in this embodiment, a given parallax may be generated between physical space images sensed by a single image sensing device, and these images having the given parallax may be composited on a left-eye virtual space image and a right-eye virtual space image, respectively.

Moreover, although a video see-through display is used as the HMD 107 in this embodiment, an optical see-through display may be used. The HMD in the latter case has a configuration in which the left-eye camera 108 and right-eye camera 109 are omitted from the HMD 107, and the left-eye display device 110 and right-eye display device 111 display virtual space images corresponding to the left and right eyes, respectively.

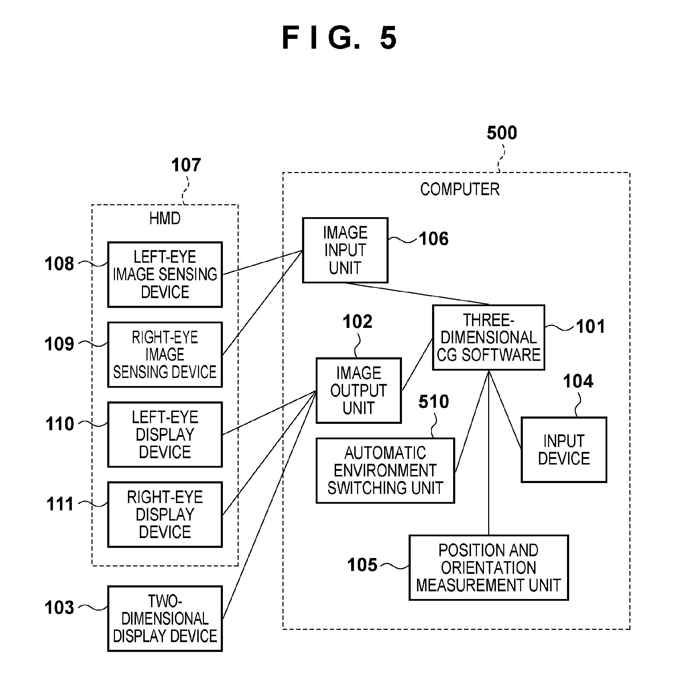

[Second Embodiment]
An example of the functional configuration of a system according to this embodiment will be explained with reference to a block diagram shown in Fig. 5. The same reference numerals as in Fig. 1 denote the same constituent elements in Fig. 5, and a description thereof will not be given.

A computer 500 is equipped with an automatic environment switching unit 510, in addition to the configuration of the computer 100. A two-dimensional display device 103 is connected to an image output unit 102. Note that an apparatus having the configuration shown in Fig. 6 is also applicable to the computer 500.

The two-dimensional display device 103 is a general display device which uses, for example, a CRT or a liquid crystal screen, and is disposed in a physical space, separately from an HMD 107.

The automatic environment switching unit 510 monitors the state of the HMD 107 to determine whether the HMD 107 is in use. In accordance with the determination result, the automatic environment switching unit 510 controls the operation of three-dimensional CG software 101.

Note that various approaches are available to monitor the state of the HMD 107. In one example, the automatic environment switching unit 510 monitors whether the power source of the HMD 107 is ON or OFF. This monitoring is desirably periodically performed. If the power source of the HMD 107 is ON, the automatic environment switching unit 510 determines that the HMD 107 is in use; or if the power source of the HMD 107 is OFF, the automatic environment switching unit 510 determines that the HMD 107 is not in use.

In another example, a contact sensor is provided at a position on the HMD 107, at which it comes into contact with the observer's head, so that the automatic environment switching unit 510 receives a signal from the contact sensor (a signal indicating whether it has come into contact with the observer's head) when the observer wears the HMD 107 on his or her head. The automatic environment switching unit 510 monitors this signal (monitors whether the HMD 107 is mounted on the observer's head). If this signal indicates that "the HMD 107 is mounted on the observer's head", the automatic environment switching unit 510 determines that the HMD 107 is in use. On the other hand, if this signal indicates that "the HMD 107 is not mounted on the observer's head", the automatic environment switching unit 510 determines that the HMD 107 is not in use.

In still another example, the automatic environment switching unit 510 monitors the position and orientation measured by the position and orientation measurement unit 105 to detect whether they have changed. The measured position and orientation naturally change with movement of the HMD 107, and this means that the automatic environment switching unit 510 monitors a change in position and orientation of the HMD 107. As far as the automatic environment switching unit 510 detects the next change in position and orientation within a specific period of time after it detects the first change in position and orientation, it determines that the HMD 107 is in use. If the automatic environment switching unit 510 detects no next change in position and orientation within a specific period of time after it detects the first change in position and orientation, it determines that the HMD 107 is not in use.

In still another example, the automatic environment switching unit 510 monitors the orientations of a left-eye camera 108, a right-eye camera 109, and the HMD 107, which are obtained by the three-dimensional CG software 101. When the position and orientation measurement unit 105 directly measures the orientations of the left-eye camera 108, right-eye camera 109, and HMD 107, the automatic environment switching unit 510 monitors these measured orientations. If the automatic environment switching unit 510 detects that the monitored orientation is directed to the display surface of the two-dimensional display device 103 (the orientation of this display surface is measured in advance and stored in the computer 500 as data), it determines that the HMD 107 is in use. On the other hand, if the automatic environment switching unit 510 detects that the monitored orientation is not directed to the display surface of the two-dimensional display device 103, it determines that the HMD 107 is not in use. Various methods are available to determine that "the monitored orientation is directed to the display surface". If, for example, the angle formed between a direction vector represented by the monitored orientation and the normal vector to the display surface is 180° ± α (α > 0), it is determined that "the monitored orientation is directed to the display surface".

In this manner, the automatic environment switching unit 510 determines using various methods whether the HMD 107 is currently in use. As a matter of course, the determination method is not limited to the above-mentioned one, and various methods are available. While the automatic environment switching unit 510 determines that the HMD 107 is currently in use, it permits execution of the three-dimensional CG software 101, as in the first embodiment. On the other hand, when the automatic environment switching unit 510 determines that the HMD 107 is not in use, it controls the three-dimensional CG software 101 so as to generate a virtual space image and output it to the two-dimensional display device 103.

Although the automatic environment switching unit 510 may be implemented by hardware, it may be stored in an external storage device 805 as a computer program. In the latter case, a CPU 801 executes this computer program to execute the above-mentioned respective types of processing assumed to be executed by the automatic environment switching unit 510.

Processing executed by the three-dimensional CG software 101 if the automatic environment switching unit 510 determines that the HMD 107 is not currently in use will be described with reference to Fig. 2 which shows a flowchart of this processing.

In step S1001, the three-dimensional CG software 101 acquires a position and orientation designated by various methods, such as a preset position and orientation, a position and orientation designated using, for example, the input device 104, or a position and orientation designated by, for example, an application program. The three-dimensional CG software 101 generates a virtual space image seen from a viewpoint having the acquired position and orientation. In step S1002, the image output unit 102 sends the virtual space image generated by the three-dimensional CG software 101 to the two-dimensional display device 103. Note that the respective techniques described in the above-described embodiments may be used in combination as needed.

[Other Embodiments]
Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (400) comprising:
a generation means (101) configured to generate an image of a virtual space and to output the image to a display device (107) which an observer wears;
a determination means (200) configured to determine whether or not the display device is in use; and
a control means (200) configured to operate said generation means if said determination means determines that the display device is in use.

2. An apparatus (400) according to claim 1, wherein said determination means (200) is configured to monitor whether a power source of the display device (107) is ON or OFF in order to determine that the display device is in use if the power source of the display device is ON, and to determine that the display device is not in use if the power source of the display device is OFF.

3. An apparatus (400) according to claim 1, wherein said determination means (200) is configured to monitor whether or not the display device (107) is mounted on a head of the observer in order to determine that the display device is in use if the display device is mounted on the head of the observer, and to determine that the display device is not in use if the display device is not mounted on the head of the observer.

4. An apparatus (400) according to claim 1, wherein said determination means (200) is configured to determine that the display device (107) is in use in a case that said determination means (200) detects a change in position and orientation of the display device in a specific period of time, and to determine that the display device is not in use if said determination means detects no change in position and orientation of the display device in the specific period of time.

5. An apparatus (400) according to claim 1, wherein said determination means (200) is configured to determine that the display device (107) is in use if said determination means detects that an orientation of the display device is directed towards a display surface of another display device (103) disposed in a physical space, separately from the display device (107) which the observer wears, and to determine that the display device (107) is not in use if said determination means detects that the orientation is not directed to the display surface.

6. An apparatus (400) according to any one of claims 1 to 5, wherein if said determination means (200) determines that the display device (107) is in use, said control means is configured to cause said generation means (101) to generate the image of the virtual space, composite the image of the virtual space on an image of a physical space, and output the composite image to the display device.

7. An apparatus (400) according to any one of claims 1 to 6, wherein if said determination means (200) determines that the display device (107) is not in use, said control means is configured to stop an operation of said generation means.

8. An apparatus (500) according to any one of claims 1 to 6, wherein if said determination means (200) determines that the display device (107) is not in use, said control means (200) is configured to cause said generation means (101) to generate the image of the virtual space and to output the image of the virtual space to another display device (103) disposed in the physical space, separately from the display device which the observer wears.

9. An apparatus (400) according to any one of claims 1 to 8, wherein the display device (107) which the observer wears includes a head-mounted display.

10. An image processing method, comprising:
generating (S1001) an image of a virtual space and outputting (S1002) the image to a display device which an observer wears;
determining whether the display device (107) is in use; and
controlling so that the image is generated and output if it is determined that the display device is in use.

11. A program that, when executed by an image processing apparatus, causes the image processing apparatus to perform a method according to claim 10.

12. A computer-readable storage medium storing a program according to claim 11.
